# FASCICULE DE BREVET EUROPEEN

(11) **EP 4 347 715 B1**
(45) Date de publication et mention de la délivrance du brevet: **21.05.2025**
(21) Numéro de dépôt: 22734662.4
(22) Date de dépôt: 02.06.2022
(51) Int. Cl.: C08L 95/00, C09K 23/00, C08L 5/00

(54) **UTILISATION DE MÉLASSE FERMENTÉE COMME ÉMULSIFIANT**
VERWENDUNG FERMENTIERTER MELASSE ALS EMULGATOR
USE OF FERMENTED MOLASSES AS AN EMULSIFIER

(30) Priorité: 03.06.2021 FR 2105874
(43) Date de publication de la demande: 10.04.2024
(73) Titulaire: Lesaffre et Compagnie, 75001 Paris (FR)
(72) Inventeur: LEBRUN, Xavier, 59520 Marquette-Lez-Lille (FR)
(74) Mandataire: Bandpay & Greuter
(86) Numéro de dépôt international: PCT/FR2022/051047
(87) Numéro de publication internationale: WO 2022/254153

(56) Documents cités:
- ES-A1- 2 113 820
- US-A- 4 877 457

## Description

### Domaine de l'invention

La présente invention concerne une nouvelle utilisation de la mélasse fermentée en tant qu'émulsifiant.

### Arrière-plan technique

Les émulsions de bitume permettent de fluidifier un bitume trop épais pour pouvoir être coulé. Typiquement, ces émulsions sont constituées de bitume, d'eau à pH acide et de dérivés d'amine comme émulsifiant. Cependant, ces dérivés aminés présentent une forte toxicité pour l'environnement.

La mélasse est un coproduit issu de la fabrication du sucre, classiquement à partir de la betterave et de la canne en sucrerie, ou des sucres roux en raffinerie. Le processus de fabrication du sucre, que celui-ci soit fait à partir de canne ou de betterave, aboutit après l'étape de cristallisation à l'obtention du sucre d'une part et de la mélasse d'autre part.

Bien qu'utilisée pour en extraire la glycine bétaïne, qui, après estérification, est utilisée en tant qu'agent tensioactif, la mélasse de betterave est, comme la mélasse de canne, plus généralement employée pour l'alimentation animale, en mélange avec de la paille ou d'autres aliments cellulosiques, mais également comme liant dans les rations complètes animales, ou encore pour favoriser chez l'animal l'ingestion d'aliments peu appétibles.

En alternative de l'alimentation animale, la mélasse est également utilisée par les industriels pour la production de produits dits « *nobles* » via des processus de fermentation. En effet, par l'intermédiaire des mécanismes de fermentation dont disposent certains micro-organismes, la mélasse peut servir de substrat et permet notamment l'obtention de levure boulangère, d'alcool éthylique, d'acides citrique et glutamique, de lysine ou encore d'antibiotiques.

En contrepartie, l'utilisation de la mélasse via les processus de fermentation génère de grandes quantités de résidus liquides de fermentation. Ces résidus liquides de fermentation correspondent à la mélasse dite fermentée.

Ayant été appauvrie en constituants par les micro-organismes, la mélasse fermentée est globalement considérée comme un résidu de fermentation présentant un faible intérêt, et se retrouve principalement valorisée dans le domaine de l'agriculture en tant qu'engrais d'épandage.

D'autres utilisations ont été décrites.

Le document WO 2019/106190 concerne l'utilisation de mélasse fermentée en tant qu'agent liant et/ou désintégrant dans une composition solide comprimée.

Le document WO 02/063941 décrit une émulsion huile/eau dans laquelle la phase aqueuse comprend de l'eau et un sous-produit de l'agriculture ou de la fermentation, tel qu'une mélasse, une vinasse et/ou un sirop, et la phase huileuse contient de l'huile et des émulsifiants.

US4877457 A décrit l'utilisation du produit de réaction de la mélasse avec une polyamine en tant qu'émulsifiant dans une émulsion de bitume.

Il existe un réel besoin de fournir des émulsifiants économiques et plus respectueux de l'environnement.

### Résumé de l'invention

L'invention concerne en premier lieu l'utilisation d'une mélasse fermentée en tant qu'émulsifiant dans une émulsion.

Dans des modes de réalisation, l'émulsion est une émulsion huile dans l'eau.

Dans des modes de réalisation, la mélasse fermentée est une mélasse fermentée de betterave et/ou une mélasse fermentée de canne.

Dans des modes de réalisation, la mélasse fermentée est une mélasse fermentée de betterave.

Dans des modes de réalisation, la mélasse fermentée est une mélasse fermentée déminéralisée.

Dans des modes de réalisation, la mélasse fermentée est une mélasse fermentée dépotassifiée.

Dans des modes de réalisation, la mélasse fermentée est présente dans l'émulsion en une quantité de 25 à 85 % en poids, de préférence de 25 à 60 % en poids, de préférence encore de 25 à 50 % en poids, plus préférentiellement de 30 à 40 % en poids, par rapport au poids total de l'émulsion.

Dans des modes de réalisation, l'émulsion comprend une quantité de phase huileuse de 15 à 75 % en poids, de préférence de 40 à 75 % en poids, de préférence encore de 50 à 75 % en poids, plus préférentiellement de 60 à 70 % en poids, par rapport au poids total de l'émulsion.

Dans des modes de réalisation, la mélasse fermentée comprend une teneur en matière sèche de 50 à 90 % en poids, de préférence de 55 à 65 % en poids.

Dans des modes de réalisation, le pH de l'émulsion vaut de 2 à 11.

Dans des modes de réalisation, l'émulsion est une émulsion de bitume ou de pétrole, de préférence l'émulsion est une émulsion de bitume.

Dans des modes de réalisation, l'émulsion est à une température supérieure à 40°C.

Dans des modes de réalisation, l'émulsion constitue, ou est présente dans, un produit alimentaire, un produit cosmétique, un produit phytosanitaire, un médicament, une peinture, un milieu de flottation, un détergent ou produit d'entretien, un milieu de réaction, tel qu'un milieu de polymérisation, un fluide de récupération assistée du pétrole, ou une colle.

L'invention concerne aussi une émulsion, de préférence huile dans l'eau, comprenant un bitume et une mélasse fermentée.

La présente invention permet de répondre au besoin exprimé ci-dessus. Elle fournit plus particulièrement un système ayant de bonnes propriétés émulsifiantes et permettant l'obtention d'émulsions stables, non toxique et respectueux de l'environnement tout en restant économique. En outre, l'invention permet de valoriser un sous-produit de la fermentation de mélasse.

Cela est accompli grâce à l'utilisation de mélasse fermentée en tant qu'émulsifiant, pour préparer une émulsion. Il a été découvert de façon surprenante que la mélasse fermentée a intrinsèquement une tension interfaciale faible par rapport à l'eau et que, lorsqu'elle est mélangée avec une phase huileuse, elle est capable de former une émulsion, la mélasse fermentée jouant le rôle à la fois de la phase aqueuse et du tensioactif.

### Brève description des figures

La **figure 1** représente un cliché de microscopie optique de l'émulsion n°1 telle que décrite dans l'exemple 3.
La **figure 2** représente un cliché de microscopie optique de l'émulsion n°2 telle que décrite dans l'exemple 3.

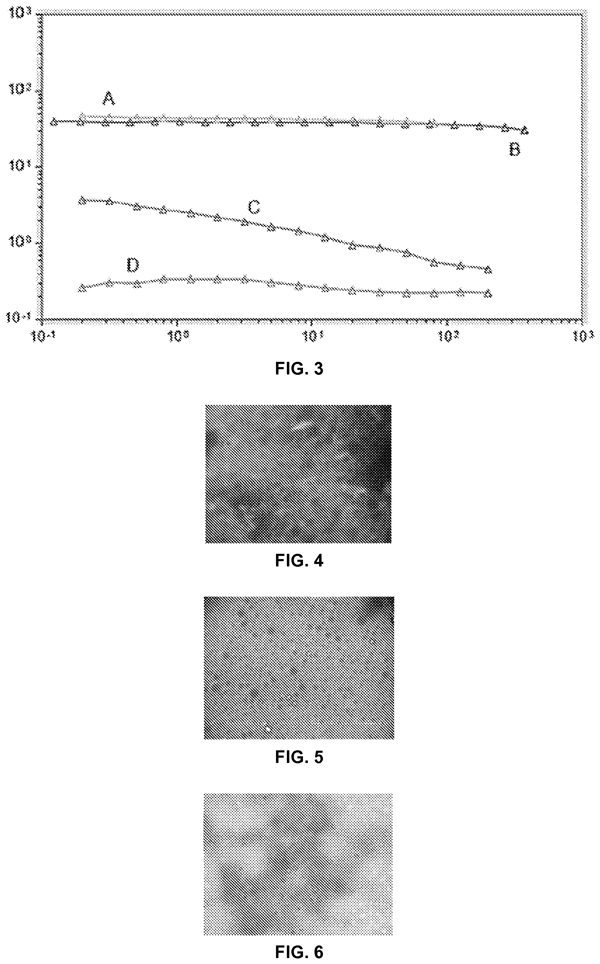

La **figure 3** représente les courbes rhéologiques obtenues pour l'émulsion n°1 (courbe C), pour l'émulsion n°2 (courbe D) et pour le pétrole brut lourd pur (courbe gris clair A) par un rhéomètre en configuration plan-plan et la courbe rhéologique obtenue pour le pétrole brut lourd pur par un rhéomètre en configuration cône-plan (courbe gris foncé B), tel que cela est décrit dans l'exemple 3. L'axe des abscisses représente le taux de cisaillement appliqué (en s⁻¹) selon une échelle logarithmique et l'axe des ordonnées représente la viscosité dynamique de la composition testée (en Pa.s) selon une échelle logarithmique.
La **figure 4** représente un cliché de microscopie optique de l'émulsion n°3 telle que décrite dans l'exemple 4.
La **figure 5** représente un cliché de microscopie optique de l'émulsion n°4 telle que décrite dans l'exemple 4.
La **figure 6** représente un cliché de microscopie optique de l'émulsion n°5 telle que décrite dans l'exemple 4.
La **figure 7** représente les courbes rhéologiques obtenues pour l'émulsion n°3 (courbe G), pour l'émulsion n°4 (courbe H), pour l'émulsion n°5 (courbe F) et pour le bitume pur (courbe E), tel que cela est décrit dans l'exemple 4. L'axe des abscisses représente le taux de cisaillement appliqué (en s⁻¹) selon une échelle logarithmique et l'axe des ordonnées représente la viscosité dynamique de la composition testée (en Pa.s) selon une échelle logarithmique.
La **figure 8** représente les courbes rhéologiques obtenues pour l'émulsion n°6 (courbe J), et pour le bitume pur (courbe I), tel que cela est décrit dans l'exemple 5. L'axe des abscisses représente le taux de cisaillement appliqué (en s⁻¹) selon une échelle logarithmique et l'axe des ordonnées représente la viscosité dynamique de la composition testée (en Pa.s) selon une échelle logarithmique.
La **figure 9** représente un cliché de microscopie optique de l'émulsion n°7 après sa préparation, tel que cela est décrit dans l'exemple 6.
La **figure 10** représente un cliché de microscopie optique de l'émulsion n°8 après sa préparation, tel que cela est décrit dans l'exemple 6.
La **figure 11** représente un cliché de microscopie optique de l'émulsion n°7 20 jours après sa préparation, tel que cela est décrit dans l'exemple 6.
La **figure 12** représente un cliché de microscopie optique de l'émulsion n°8 20 jours après sa préparation, tel que cela est décrit dans l'exemple 6.
La **figure 13** représente un cliché de microscopie optique de l'émulsion n°9 de pH 10 telle que décrite dans l'exemple 7.
La **figure 14** représente un cliché de microscopie optique de l'émulsion n°10 de pH 3 telle que décrite dans l'exemple 7.
La **figure 15** représente un cliché de microscopie optique de l'émulsion n°11 de pH 6 telle que décrite dans l'exemple 8.
La **figure 16** représente un cliché de microscopie optique de l'émulsion n°12 de pH 10 telle que décrite dans l'exemple 8.

### Description détaillée

L'invention est maintenant décrite plus en détail et de façon non limitative dans la description qui suit.

Dans le présent texte, sauf indication expresse différente, tous les pourcentages (%) indiqués sont des pourcentages en poids.

L'invention concerne l'utilisation de mélasse fermentée en tant qu'émulsifiant dans une émulsion.

Au sens de la présente invention, par « *mélasse fermentée* », on entend une mélasse fermentée n'ayant pas subi de procédé d'estérification (par exemple en vue d'estérifier la glycine bétaïne présente dans la mélasse fermentée de betterave).

Comme précédemment mentionné, la mélasse fermentée est un coproduit de la mélasse obtenu après fermentation de cette dernière par des bactéries, des levures ou des champignons, ladite fermentation permettant par exemple d'obtenir des produits dits « *nobles* » tels que la levure boulangère, l'alcool éthylique, l'acide citrique ou encore l'acide glutamique.

La mélasse fermentée utilisée dans l'invention peut être une mélasse fermentée de betterave ou une mélasse fermentée de canne. La mélasse fermentée utilisée dans l'invention peut alternativement être un mélange de mélasse fermentée de betterave et de mélasse fermentée de canne. Par exemple la mélange peut comprendre de 1 à 25 % en poids de mélasse fermentée de betterave et de 75 à 99 % en poids de mélasse fermentée de canne, ou de 25 à 50 % en poids de mélasse fermentée de betterave et de 50 à 75 % en poids de mélasse fermentée de canne, ou de 50 à 75 % en poids de mélasse fermentée de betterave et de 25 à 50 % en poids de mélasse fermentée de canne, ou de 75 à 99 % en poids de mélasse fermentée de betterave et de 1 à 25 % en poids de mélasse fermentée de canne. De manière particulièrement préférée, la mélasse fermentée selon l'invention comprend de 75 à 100 % en poids de mélasse fermentée de betterave et de 0 à 25 % en poids de mélasse fermentée de canne.

De manière plus préférée, la mélasse fermentée utilisée est une mélasse fermentée de betterave. La mélasse fermentée de betterave permet l'obtention d'une tension interfaciale avec une phase huileuse plus faible que la mélasse fermentée de canne, et a par conséquent de meilleurs propriétés émulsifiantes que la mélasse fermentée de canne.

La mélasse fermentée de canne présente un comportement rhéologique légèrement rhéofluidifiant (sa viscosité dépend du cisaillement) tandis que la mélasse fermentée de betterave présente un comportement rhéologique presque newtonien. Plus la mélasse fermentée aura un comportement rhéologique rhéofluidifiant, plus la stabilité de l'émulsion sera augmentée.

De manière avantageuse, la mélasse fermentée est obtenue par la fermentation de la mélasse par des levures.

De préférence, la mélasse fermentée incorporée dans l'émulsion comprend une teneur en matière sèche de 50 à 90 % en poids, de préférence de 55 à 65 % en poids, plus préférentiellement de 58 à 62 % en poids. En particulier, la mélasse fermentée peut comprendre de 50 à 55 % en poids, ou de 55 à 58 % en poids, ou de 58 à 60 % en poids, ou de 60 à 62 % en poids, ou de 62 à 65% en poids, ou de 65 à 70 % en poids, ou de 70 à 75 % en poids, ou de 75 à 80 % en poids, ou de 80 à 85 % en poids, ou de 85 à 90 % en poids, de matière sèche. De préférence, le reste de la mélasse fermentée est de l'eau (la mélasse fermentée incorporée dans l'émulsion peut ainsi comprendre de 10 à 50 % en poids d'eau, de préférence de 35 à 45 % en poids d'eau, plus préférentiellement de 38 à 42 % en poids d'eau).

La mélasse fermentée récupérée à l'issu du bain fermentaire contient généralement de 5 à 10 % en poids de matière sèche (et donc de 90 à 95 % en poids d'eau). La mélasse fermentée telle que récupérée après le procédé de fermentation peut subir une concentration, afin de réduire la quantité d'eau, ou une dilution, de préférence par de l'eau, par exemple pour atteindre une teneur en matière sèche dans une des gammes mentionnées ci-dessus.

La mélasse fermentée incorporée dans l'émulsion peut être une mélasse fermentée déminéralisée. La déminéralisation peut par exemple consister en une précipitation des sels de sulfate de potassium (K₂SO₄), sulfate de sodium (Na₂SO₄), sulfate de magnésium (MgSO₄) et sulfate de calcium (CaSO₄) par ajout d'acide sulfurique. De manière avantageuse, la déminéralisation permet d'augmenter la proportion de la matière organique au sein de la mélasse fermentée et d'augmenter la proportion des molécules tensioactives de la mélasse par rapport à la matière sèche totale dans la mélasse fermentée.

La mélasse fermentée incorporée dans l'émulsion peut être une mélasse fermentée dépotassifiée, par exemple via une acidification par une solution d'acide sulfurique suivie d'une neutralisation à l'ammoniaque.

Alternativement, la mélasse fermentée utilisée pour la formation de l'émulsion peut être une mélasse fermentée dite « *brute* », c'est-à-dire qu'elle n'a été soumise à aucun traitement chimique ou physicochimique (la mélasse fermentée brute pouvant cependant avoir été concentrée ou diluée).

La mélasse fermentée peut être définie par sa répartition en matières azotées et par son aminogramme. La mélasse fermentée selon l'invention peut ainsi présenter une répartition des matières azotées comme ci-après :
- azote des acides aminés totaux déterminés par la méthode de Kjeldahl : 25 % à 100 % en poids l'azote total,
- azote de bétaïne : 0 % à 50 % en poids de l'azote total,
- azote ammoniacal : 0 % à 30 % en poids de l'azote total.

Plus particulièrement, la mélasse fermentée selon l'invention peut présenter une répartition des matières azotées comme ci-après, notamment lorsqu'il s'agit d'une mélasse fermentée de betterave :
- azote des acides aminés totaux déterminés par la méthode de Kjeldahl : 25 % à 50 % en poids l'azote total,
- azote de bétaïne : 40 % à 50 % en poids de l'azote total,
- azote ammoniacal : 2 % à 3 % en poids de l'azote total.

Alternativement, la mélasse fermentée selon l'invention peut présenter une répartition des matières azotées comme ci-après, en particulier lorsqu'il s'agit d'une mélasse fermentée de canne :
- azote des acides aminés totaux déterminés par la méthode de Kjeldahl : 70 % à 100 % en poids l'azote total,
- azote ammoniacal : 0 % à 30 % en poids de l'azote total.

Concernant l'aminogramme des protides de la mélasse fermentée selon l'invention, les teneurs moyennes en acides aminés peuvent être les suivantes (les plages des teneurs sont données en g/kg de matière sèche de la mélasse fermentée):
- acide aspartique : 6 - 8 ;
- thréonine : 0,5 - 3 ;
- serine acide glutamique : 115 - 130 ;
- proline : 3 - 4 ;
- glycine : 4 - 5 ;
- alanine : 2,5 - 3,5 ;
- valine : 2,5 - 3,5 ;
- méthionine et cystéine : 0,5 - 3 ;
- isoleucine : 1 ,5 - 2,5 ;
- tyrosine : 2 - 3,5 ;
- leucine : 3 - 4,5 ;
- phénylalanine : 1 - 2 ;
- lysine : 0,5 - 2,5 ;
- histidine : 0,5 - 2 ; et
- arginine : 0,2 - 1.

La mélasse fermentée présente une faible teneur en sucres, ces derniers ayant été consommés par les micro-organismes lors du procédé de fermentation. Par « *faible teneur en sucres* », on entend que la teneur en sucres est inférieure ou égale à 5 % en poids, ou inférieure ou égale à 4 % en poids, ou inférieure ou égale à 3 % en poids, ou inférieure ou égale à 2 % en poids, et de préférence, inférieure ou égale à 1% en poids, par rapport à la masse totale de l'extrait sec de mélasse fermentée. Plus préférentiellement, la mélasse fermentée selon l'invention est exempte de sucres.

La mélasse fermentée utilisée selon l'invention peut avoir une densité de 1,10 à 1,50, de préférence de 1,20 à 1,40, plus particulièrement de 1,25 à 1,35. La densité de la mélasse fermentée peut être déterminée à l'aide d'un densimètre DMA^{®} 4500M de la société Anton Paar à la température de 20°C sur un échantillon de 2 mL.

La mélasse fermentée utilisée selon l'invention peut avoir une viscosité à 20°C de 50 à 6000 mPA.s, de préférence de 500 à 5000 mPA.s, de préférence encore de 1000 à 4000 mPA.s. La viscosité peut être mesurée à l'aide d'un viscosimètre Brookfield à la température de 20°C et à un taux de cisaillement de 20 s⁻¹.

La mélasse fermentée utilisée pour former l'émulsion peut avoir un pH de 2 à 12.

Selon l'invention, la mélasse fermentée est utilisée dans une émulsion, comme émulsifiant. Pour cela, elle est combinée avec une phase huileuse.

A titre d'exemple, la phase huile peut comprendre, ou être, une huile végétale, une huile animale, une huile minérale, un pétrole, un bitume, un principe actif phytosanitaire, un principe actif thérapeutique, un pigment, une résine ou des combinaisons de celles-ci.

Comme huile végétale, on peut par exemple citer l'huile de colza, l'huile de pépin de raisin, l'huile d'amande douce, l'huile d'olive, l'huile de jojoba et/ou l'huile de tournesol.

Comme huile animale, on peut citer les huiles de poisson, l'huile de foie de morue, l'huile de baleine, l'huile de cachalot, et/ou l'huile de pied de bœuf.

De manière avantageuse, la quantité de mélasse fermentée utilisée dans l'émulsion est de 25 à 85 % en poids, de préférence de 25 à 60 % en poids, de préférence encore de 25 à 50 % en poids, plus préférentiellement de 30 à 40 % en poids, par rapport au poids total de l'émulsion. Dans des modes de réalisation, la quantité de mélasse fermentée dans l'émulsion peut valoir de 25 à 30 % en poids, ou de 30 à 35 % en poids, ou de 35 à 40 % en poids, ou de 40 à 45 % en poids, ou de 45 à 50 % en poids, ou de 50 à 55 % en poids, ou de 55 à 60 % en poids, ou de 60 à 65 % en poids, ou de 65 à 70 % en poids, ou de 70 à 75 % en poids, ou de 75 à 80 % en poids, ou de 80 à 85 % en poids, par rapport au poids total de l'émulsion.

De préférence, la quantité de phase huileuse dans l'émulsion vaut de 15 à 75 % en poids, de préférence encore de 40 à 75 % en poids, de préférence encore de 50 à 75 % en poids, plus préférentiellement de 60 à 70 % en poids, par rapport au poids total de l'émulsion. Dans des modes de réalisation, la quantité de phase huileuse dans l'émulsion peut valoir de 15 à 20 % en poids, ou de 20 à 25 % en poids, ou de 25 à 30 % en poids, ou de 30 à 35 % en poids, ou de 35 à 40 % en poids, ou de 40 à 45 % en poids, ou de 45 à 50 % en poids, ou de 50 à 55 % en poids, ou de 55 à 60 % en poids, ou de 60 à 65 % en poids, ou de 65 à 70 % en poids, ou de 70 à 75 % en poids, par rapport au poids total de l'émulsion.

De préférence, l'émulsion comprend au moins 5 % en poids, plus préférentiellement au moins 10 % en poids, encore plus préférentiellement au moins 12 % en poids, plus particulièrement au moins 15 % en poids, d'eau, par rapport au poids total de l'émulsion, par exemple de 10 à 40 % en poids, ou de 12 à 30 % en poids, d'eau. Dans des modes de réalisation, l'émulsion peut comprendre, par rapport au poids total de l'émulsion, de 5 à 10 % en poids, ou de 10 à 12% en poids, ou de 12 à 15 % en poids, ou de 15 à 20 % en poids, ou de 20 à 25 % en poids en poids, ou de 25 à 30 % en poids, ou de 30 à 35 % en poids, ou de 35 à 40 % en poids, d'eau.

L'émulsion peut comprendre une teneur en matière sèche de 60 à 95 %, de préférence de 75 à 85 % en poids. En particulier, l'émulsion peut comprendre une teneur en matière sèche de 60 à 65 %, ou de 65 à 70 %, ou de 70 à 75 %, ou de 75 à 80 %, ou de 80 à 85 %, ou de 85 à 90 %, ou de 90 à 95 %, en poids (par rapport au poids total de l'émulsion).

L'émulsion peut consister en la mélasse fermentée et en la phase huileuse.

Alternativement, la mélasse fermentée et la phase huileuse peuvent être combinée avec une autre solution aqueuse pour former l'émulsion selon l'invention. A titre d'exemples de solution aqueuse, on peut mentionner les jus de fruits, les vinaigres, les eaux florales et/ou les saumures.

La phase aqueuse de l'émulsion selon l'invention a avantageusement une viscosité à 20°C de 50 à 6000 mPA.s, de préférence de 100 à 5000 mPA.s, de préférence encore de 150 à 4000 mPA.s. La viscosité peut être mesurée comme indiqué ci-dessus.

L'émulsion peut comprendre un ou plusieurs autres tensioactifs, par exemple choisis dans le groupe constitué des sorbitans et de leurs dérivés, des alkyl polyglucosides, des sucro esters, des esters de glycine betaine, des rhamnolipides, des surfactins, des sophorolipides, des glycolipides, des pectines de betterave, des phospholipides, des lécithines, des amines quaternaires et de leurs dérivés, des amines grasses et des amides, du chitosan et de ses dérivés, et des savons et de leurs dérivés. Ces tensioactifs peuvent être présents dans l'émulsion en une quantité de 0 à 10 % en poids, de préférence de 0 à 2 % en poids, ou de 0,5 à 2 % en poids (en particulier lorsque l'émulsion est une émulsion de bitume).

De manière avantageuse, l'émulsion est dépourvue de tensioactifs autres que la mélasse fermentée, en particulier elle est dépourvue de tensioactifs tels que mentionnés ci-dessus.

L'émulsion peut comprendre un ou plusieurs additifs, en particulier un ou plusieurs hydrocolloïdes, tels que les gommes de xanthane, les celluloses, les pectines, les alginates et/ou les amidons. Ces additifs peuvent être présents dans l'émulsion en une quantité de 0 à 1 % en poids, de préférence de 0 à 0,5 % en poids.

L'émulsion a avantageusement un pH allant de 2 à 11, de préférence de 5 à 11. L'émulsion peut avoir un pH de 2 à 3, ou de 3 à 4, ou de 4 à 5, ou de 5 à 6, ou de 6 à 7, ou de 7 à 8, ou de 8 à 9, ou de 9 à 10, ou de 10 à 11.

De manière particulièrement avantageuse, l'émulsion est une émulsion huile dans l'eau, c'est-à-dire que la phase continue est la phase aqueuse et la phase discontinue est la phase huileuse.

L'émulsion peut être préparée par le mélange de la mélasse fermentée avec au moins une phase huileuse et éventuellement les autres constituants de l'émulsion (tels que d'autres tensioactifs, les additifs et/ou une ou plusieurs autres solutions aqueuses). Le mélange peut être effectué en une étape (les constituants étant tous ajoutés dans le mélange simultanément) ou en plusieurs étapes (un prémélange de certains constituants étant d'abord réalisé avant l'ajout d'autres constituants). De préférence, la phase huileuse est versée dans la mélasse fermentée.

Le mélange de la mélasse fermentée et de la phase huileuse (et optionnellement des autres constituants de l'émulsion) peut être effectué à l'aide d'un homogénéiseur ou d'un disperseur.

Le mélange peut être effectué pendant une durée de 1 min à 1 h, de préférence de 2 à 30 min, plus préférentiellement de 3 à 15 min, par exemple pendant une durée de 5 min.

De manière avantageuse, avant son mélange avec la mélasse fermentée, la phase huileuse est chauffée, de préférence jusqu'à une température supérieure ou égale à 30°C, plus préférentiellement jusqu'à une température supérieure ou égale à 35°C, encore plus préférentiellement jusqu'à une température supérieure ou égale à 40°C. Dans des modes de réalisation, la phase huileuse peut être chauffée jusqu'à une température supérieure ou égale à 50°C, ou supérieure ou égale à 60°C, ou supérieure ou égale à 70°C, ou supérieure ou égale à 80°C.

La température de la mélasse fermentée, lors de son mélange avec la phase huileuse, peut être la température ambiante (c'est-à-dire entre 15 et 30°C). Alternativement, la mélasse fermentée peut être à la température de la phase huileuse ou à une température proche de la température de la phase huileuse (par exemple dans une gamme de +/-10°C par rapport à la température de la phase huileuse).

L'émulsion peut avantageusement être à une température supérieure ou égale à 40°C. Dans des modes de réalisation, l'émulsion peut être à une température supérieure ou égale à 50°C ou supérieure ou égale à 60°C. Alternativement, l'émulsion peut être à la température ambiante. Dans des modes de réalisation, l'émulsion peut être à une température de 5 à 15°C, ou de 15 à 30°C, ou de 30 à 40°C, ou de 40 à 50°C, ou de 50 à 60°C, ou de 60 à 70°C, ou de 70 à 80°C, ou de 80 à 90°C.

L'émulsion préparée selon l'invention peut être utilisée dans tout type d'application.

L'émulsion peut avantageusement être une émulsion de bitume, c'est-à-dire que la phase huileuse est un bitume. Former une émulsion de bitume permet de fluidifier le bitume et de faciliter son application. Les bitumes utilisables dans l'invention peuvent être du bitume pur, du bitume modifié ou du bitume spécial, seuls ou en mélange. Ils comprennent les bitumes d'origine naturelle, ceux contenus dans des gisements de bitume naturel, d'asphalte naturel ou les sables bitumineux. Les bitumes selon l'invention comprennent aussi les bitumes provenant du raffinage du pétrole brut. Les bitumes proviennent de la distillation atmosphérique et/ou sous vide du pétrole. Ces bitumes peuvent être éventuellement soufflés, viscoréduits et/ou issus du procédé de désasphaltage. Les différents bitumes obtenus par les procédés de raffinage peuvent être combinés entre eux. Le bitume peut aussi être un bitume de recyclage. Les bitumes peuvent être des bitumes de grade dur ou de grade mou. Le bitume selon l'invention a de préférence une pénétrabilité inférieure à 800 dixièmes de mm à 25°C, mesurée par la norme NF EN 1426, par exemple une pénétrabilité à 25°C mesurée par la norme NF EN 1426 allant de 10 à 30 dixièmes de mm, ou de 30 à 50 dixièmes de mm, ou de 50 à 100 dixièmes de mm, ou de 100 à 200 dixièmes de mm, ou de 200 à 300 dixièmes de mm, ou de 300 à 400 dixièmes de mm, ou de 400 à 500 dixièmes de mm, ou de 500 à 600 dixièmes de mm, ou de 600 à 700 dixièmes de mm, ou de 700 à 800 dixièmes de mm.

L'émulsion de bitume a de préférence une température supérieure à 40°C, de préférence supérieure ou égale à 50°C ou supérieure ou égale à 60°C.

De préférence, pour la préparation de l'émulsion de bitume, le bitume est chauffé jusqu'à atteindre une température supérieure ou égale à 70°C, de préférence supérieure ou égale à 80°C, préalablement à son mélange avec la mélasse fermentée.

Les émulsions de bitume selon l'invention peuvent être utilisées dans diverses applications industrielles, telles que dans l'industrie routière ou l'industrie des toitures. Par exemple, les émulsions de bitume peuvent être utilisées dans l'industrie routière, pour la réalisation de couches de base, de couches de liaison et/ou de couches d'assise pour chaussées. Elles peuvent également être utilisées pour le revêtement de sols, notamment de voies de circulation. Comme sols pouvant être revêtus, on peut mentionner les chaussées, les sols de parkings ; les voies de circulation pour piétons, telles que les trottoirs ou les terrasses ; les aménagements urbains, tels que les pistes de skateboards ; les sols d'équipements sportifs ou de sites industriels ; les sols de chambres froides. Les émulsions de bitume selon l'invention peuvent également être utilisées pour préparer un revêtement d'étanchéité, une membrane ou une couche d'imprégnation. Les émulsions de bitume sont adaptées à la fabrication de membranes d'étanchéité, de membranes antibruit, de membranes d'isolation, des revêtements de surface, des dalles de moquette, des couches d'imprégnation.

Dans d'autres modes de réalisation, l'émulsion peut être une émulsion de pétrole (c'est-à-dire que la phase huileuse est un pétrole), par exemple une émulsion de pétrole brut lourd. De préférence, le pétrole, par exemple le brut lourd, est chauffé jusqu'à atteindre une température supérieure ou égale à 35°C, de préférence supérieure ou égale à 40°C, préalablement à son mélange avec la mélasse fermentée.

L'émulsion selon l'invention peut être utilisée dans un grand nombre d'autres industries ou secteurs, par exemple dans l'industrie alimentaire, dans l'industrie cosmétique, dans l'industrie phytosanitaire, dans l'industrie pharmaceutique, dans l'industrie des peintures et revêtements, dans l'industrie métallurgique, dans l'industrie des détergents et produits d'entretien, dans l'industrie chimique, dans l'industrie pétrolière, dans l'industrie des adhésifs...

Ainsi, l'émulsion peut être utilisée en tant que, ou être présente dans un produit alimentaire, tel qu'une vinaigrette ou une crème.

Alternativement, l'émulsion peut être utilisée en tant que, ou être présente dans un produit cosmétique, tel qu'une crème cosmétique.

Alternativement, l'émulsion peut être utilisée en tant que, ou être présente dans un produit phytosanitaire, par exemple un produit insecticide, fongicide ou herbicide.

Alternativement, l'émulsion peut être utilisée en tant que, ou être présente dans un médicament, par exemple un médicament comprenant un principe actif huileux.

Alternativement, l'émulsion peut être utilisée en tant que, ou être présente dans une peinture, par exemple une peinture comprenant un pigment et/ou une résine en émulsion huile dans l'eau.

Alternativement, l'émulsion peut être utilisée en tant que, ou être présente dans un milieu de flottation.

Alternativement, l'émulsion peut être utilisée en tant que, ou être présente dans un détergent ou dans un produit d'entretien, tel qu'un produit de nettoyage des textiles et/ou des surfaces ou un cirage pour meubles et/ou chaussures.

Alternativement, l'émulsion peut être utilisée en tant que, ou être présente dans un milieu de réaction, tel qu'un milieu de polymérisation, pour effectuer une polymérisation en émulsion.

Alternativement, l'émulsion peut être utilisée en tant que, ou être présente dans un fluide de récupération assistée du pétrole, notamment un fluide de récupération assistée du pétrole comprenant du pétrole en tant que phase huileuse.

Alternativement, l'émulsion peut être une émulsion de polymère (ou latex). L'émulsion comprend alors au moins un polymère, de préférence choisi dans le groupe constitué des copolymères de styrène-butadiène (SBR), des polysaccharides, des amidons, des polymères d'acétate de polyvinyle, des polyacrylates, des caoutchoucs naturels (NR), des copolymères de styrène-butadiène-butylène-styrène (SBBS), des copolymères de styrène-butadiène-styrène (SBS), des copolymères de styrène-éthylène-butylène-styrène (SEBS), des copolymères de styrène-éthylène-propylène-styrène (SEPS), des copolymères de styrène-éthylène-éthylène-propylène-styrène (SEEPS), des copolymères de styrène-isoprène-butadiène-styrène (SIBS), des copolymères de styrène-isoprène-styrène (SIS), des copolymères de styrène-isoprène, des copolymères de styrène-éthylène-butylène, des copolymères de styrène-éthylène-propylène, des polybutadiènes, des polyisoprènes, et des combinaisons de ceux-ci. L'émulsion peut être utilisée en tant que, ou être présente dans une colle.

L'invention concerne également une émulsion comprenant un bitume et une mélasse fermentée. L'émulsion peut être telle que décrite ci-dessus.

### Exemples

Les exemples suivants illustrent l'invention sans la limiter.

### Exemple 1 (exemple comparatif)

Une poudre anhydre obtenue après élimination de l'eau d'une mélasse fermentée de canne a été ajoutée en différentes concentrations (0,5 % ; 1 % ; 2 % ; 5 % et 10 % en poids) à un pétrole brut lourd.

Une observation au microscope des compositions de pétrole brut lourd comprenant 5 et 10 % de poudre anhydre a montré que la poudre ne s'est pas dissoute dans le pétrole brut lourd et est restée sous forme de particules solides.

La viscosité de chacun des mélanges de pétrole brut lourd et poudre anhydre et la viscosité d'une composition comprenant 100 % de pétrole brut lourd ont été mesurées à 40°C en fonction du taux de cisaillement (sur une gamme de 0,1 à 400 s⁻¹) par un rhéomètre DHR3 de la société TAInstruments en configuration cône-plan (cône de 1° et plan de 4 cm de diamètre).

Tous les mélanges pétrole brut lourd/poudre anhydre ont une viscosité qui reste proche de celle du pétrole brut lourd pur. En l'absence totale d'eau, l'extrait anhydre de mélasse fermentée n'a pas permis de diminuer efficacement la viscosité du pétrole brut lourd.

### Exemple 2 - Mesure de la tension interfaciale

Les compositions suivantes ont été testées :
- DRM 1 : mélasse fermentée de canne comprenant environ 55 % en poids de matière sèche ;
- DRM 2 : mélasse fermentée de betterave comprenant environ 60 % en poids de matière sèche ;
- DRM 3 : eau comprenant 20 g/L de NaCl et aucun tensioactif.

Ces trois compositions ont chacune été mélangée avec un pétrole brut léger (du fournisseur FAB) de sorte à créer une interface entre la composition et le pétrole brut léger. La tension interfaciale a été mesurée à 60°C à l'aide d'un tensiomètre K100 de la société Krüss équipé d'une plaque de Wilhelmy.

Un second test a été réalisé, dans lequel chacune des trois compositions DRM 1, DRM 2 et DRM 3 a été mélangée avec du xylène de sorte à créer une interface entre la composition et le xylène. La tension interfaciale a été mesurée à 25°C à l'aide du tensiomètre à plaque de Wilhelmy K100.

Les résultats sont présentés dans le tableau ci-dessous :

**[Table 1]**

| | **Mélange avec pétrole brut léger (60°C)** | **Mélange avec xylène (25°C)** |
|---|---|---|
| DRM 3 | 12,2 mN/m | 24,0 mN/m |
| DRM 1 | 4,4 mN/m | 10,2 mN/m |
| DRM 2 | 2,4 mN/m | 5,7 mN/m |

On constate que les mélasses fermentées permettent l'obtention d'une tension interfaciale, lors d'un mélange avec une phase huileuse, plus faible qu'une solution aqueuse à 20 g/L de NaCl, indiquant que les mélasses fermentées ont potentiellement une activité de surface.

On observe également que la mélasse fermentée de betterave permet d'atteindre une tension interfaciale plus faible (d'un facteur de presque 2) que la mélasse fermentée de canne.

### Exemple 3 - Emulsions de pétrole brut lourd

Une émulsion (émulsion n°1) a été réalisée à l'aide d'un homogénéiseur UltraTurrax T25 comme suit. Une masse de 45 g (34 mL) de la mélasse fermentée DRM 1 (telle que décrite dans l'exemple 2 ci-dessus) a été mise dans un bécher. Le pétrole brut lourd a été chauffé jusqu'à la température de 40°C dans un four. Il a ensuite été versé à l'aide d'une seringue en une quantité de 30 mL dans la mélasse fermentée, pendant que la préparation est mélangée avec l'homogénéisateur réglé à 20000 tr/min. Le mélange a été effectué pendant 5 minutes. L'émulsion comprend 47 % en volume de pétrole brut lourd.

Une seconde émulsion (émulsion n°1) a été réalisée de la même façon que l'émulsion n°1, excepté que la mélasse fermentée DRM 2 (telle que décrite dans l'exemple 2 ci-dessus) a été utilisée à la place de la mélasse fermentée DRM 1.

Une gouttelette de l'émulsion n°2 a été introduite dans de l'eau du robinet. La gouttelette s'est dispersée dans l'eau, l'émulsion est donc une émulsion huile dans l'eau. Une gouttelette de l'émulsion n°2 a également été introduite dans de l'heptane. La gouttelette ne s'est pas dispersée dans l'heptane, confirmant que la phase continue de l'émulsion est la phase aqueuse.

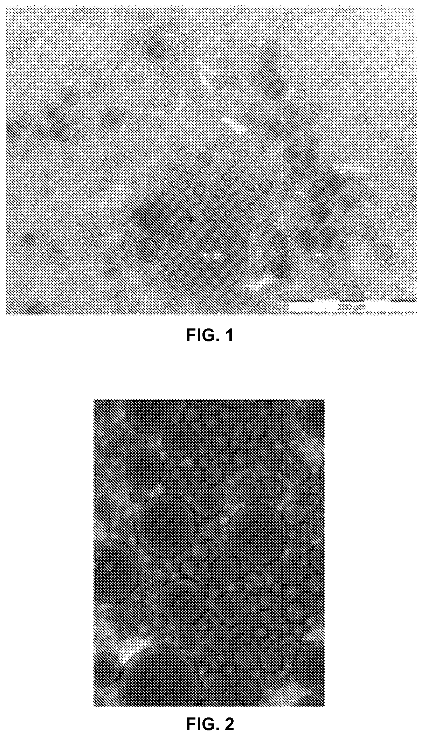

Les deux émulsions n°1 et n°2 ont été observées par microscopie optique. Les clichés de microscopie optique sont présentés en **figures 1** et **2****.**

On observe que les deux émulsions contiennent des gouttelettes de phase huileuse qui sont plutôt polydispersées. La présence de mélasse fermentée a donc permis la formation d'une émulsion.

Des mesures rhéologiques ont également été réalisées sur les émulsions n°1 et n°2 : la viscosité a été mesurée à 40°C avec un rhéomètre en configuration plan-plan (plateaux parallèles rugueux de 4 cm de diamètre) avec un entrefer de 750 µm pour limiter l'effet du glissement. Une mesure de viscosité du pétrole brut lourd pur avec la même géométrie et une mesure avec une géométrie cône-plan ont également été effectuées.

Les résultats sont présentés en **figure 3****.**

On constate que les émulsions de mélasse fermentée/pétrole brut lourd ont une viscosité bien inférieure à celle du pétrole brut lourd.

### Exemple 4 - Emulsions de bitume

Des tests ont été réalisés avec le bitume Esso 160200.

Une émulsion (émulsion n°3) a été réalisée de la façon suivante : le bitume a été chauffé jusqu'à une température de 80°C puis un volume de 51 mL de bitume a été introduit dans 45 g (34 mL) de mélasse fermentée DRM 1, de manière à atteindre une quantité de bitume de 60 % en volume. Le mélange a été mélangé pendant 5 minutes avec un homogénéiseur UltraTurrax à 20000 tr/min.

Une deuxième émulsion (émulsion n°4) a été réalisée de la même façon que l'émulsion n°3, excepté que la mélasse fermentée DRM 2 a été utilisée à la place de la mélasse fermentée DRM 1.

Une troisième émulsion (émulsion n°5) a été réalisée de la même façon que l'émulsion n°4, excepté que la quantité de bitume introduite dans la mélasse fermentée DRM 2 est telle que l'émulsion comprend 70 % en volume de bitume.

Les émulsions n°3, n°4 et n°5 ont été observées par microscopie optique. Les clichés de microscopie optique sont présentés en **figures 4, 5** et **6****.**

On constate que les gouttelettes de phase huileuse sont plutôt polydispersées. La présence de mélasse fermentée a donc permis la formation d'émulsions de bitume.

Les trois émulsions n°3, n°4 et n°5 sont stables.

Une gouttelette de chaque émulsion a été introduite dans l'eau et dans l'heptane : pour chaque émulsion, la gouttelette s'est dispersée dans l'eau mais pas dans l'heptane : les émulsions n°3, n°4 et n°5 sont des émulsions huile dans l'eau.

Des mesures rhéologiques ont été effectuées sur les trois émulsions n°3, n°4 et n°5 et sur le bitume Esso 160200 pur. La viscosité a été mesurée à 40°C avec un rhéomètre en configuration plan-plan (plateaux parallèles de 4 cm de diamètre) avec plaque Peltier.

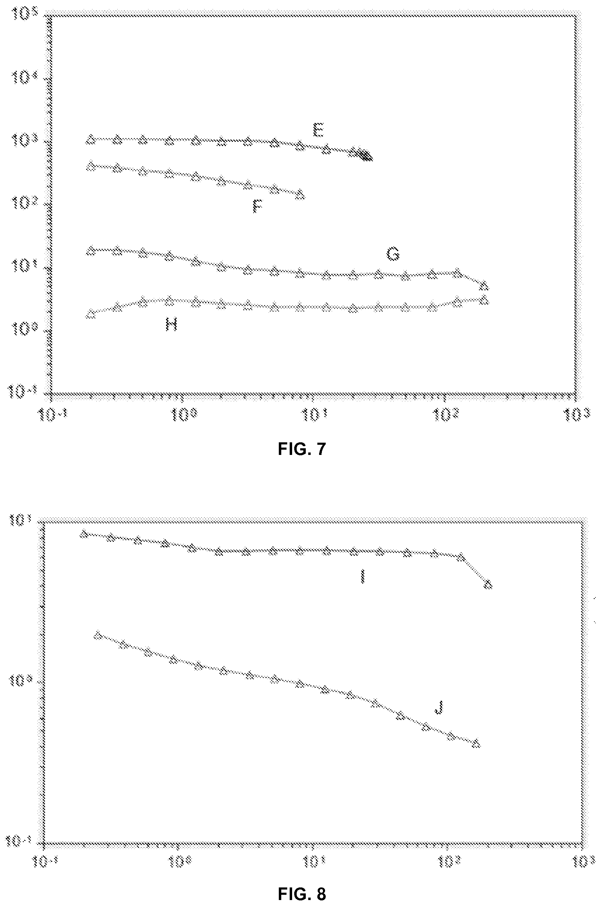

Les résultats sont présentés en **figure 7****.**

On constate que les émulsions de mélasse fermentée de canne ou de betterave et de 60 % en volume de bitume (émulsions n°3 et n°4) ont une viscosité très inférieure à celle du bitume pure. La mélasse fermentée de betterave permet une diminution de la viscosité plus importante que la mélasse fermentée de canne.

En outre, une réduction de la viscosité (par rapport au bitume pur) est observée également dans l'émulsion n°5 comprenant 70 % en volume de bitume.

### Exemple 5 - Emulsions de bitume à 50 % en volume

Une émulsion de bitume (émulsion n°6) a été réalisée de la même façon que l'émulsion n°3, excepté que la quantité de bitume introduite dans la mélasse fermentée DRM 1 est de 50 % en volume.

Des mesures rhéologiques ont été effectuées sur cette émulsion et sur le bitume pur. La viscosité a été mesurée à 40°C avec un rhéomètre en configuration plan-plan (plateaux parallèles de 4 cm de diamètre) avec plaque Peltier.

Les résultats sont présentés en **figure 8****.**

On constate que l'ajout de mélasse fermentée de canne avec le bitume, pour former une émulsion, permet une réduction significative de la viscosité.

L'émulsion a été laissée à refroidir et un déphasage a été observé lorsque la température de l'émulsion est redescendue à 40°C. Cela pourrait être avantageux dans des applications de coulage de bitume, dans lesquelles une rupture de l'émulsion est généralement nécessaire après le coulage du bitume.

### Exemple 6 - Emulsions d'huile de colza

Deux émulsions comprenant 60 % en poids d'huile de colza et 40 % en poids de mélasse fermentée et ayant respectivement un pH de 10 (émulsion n°7) et un pH de 6 (émulsion n°8) ont été préparées. La mélasse fermentée utilisée pour préparer ces émulsions est une mélasse fermentée comprenant de 80 à 90 % de mélasse fermentée de betterave et de 10 à 20 % de mélasse fermentée de canne, ayant une teneur en matière sèche de 60 % et un pH de 6. Pour préparer l'émulsion n°7, une solution aqueuse d'hydroxyde de potassium à 50 % en poids a été ajoutée à la mélasse fermentée jusqu'à l'obtention d'un pH compris entre 10 et 11. Une très légère dilution est observée lorsque le pH de la mélasse fermentée est augmenté.

La préparation des émulsions a été réalisée comme suit. L'huile de colza a été chauffée jusqu'à une température de 60°C puis une quantité de 60 g d'huile a été introduite d'un seul trait dans 40 g de mélasse fermentée également chauffée à la même température, de manière à atteindre une quantité d'huile de 60 % en poids. Le mélange a été mélangé pendant 1 minute avec un homogénéiseur UltraTurax à 12 000 tr/min puis a été coulé à chaud dans deux tubes de centrifugation pour suivre la stabilité forcée (accélération du déphasage par centrifugation) et la stabilité dans le temps (après 20 jours). Pour forcer la séparation, un des deux tubes a été centrifugé à 8 000 tr/min pendant 10 minutes à 20°C, 2h après la préparation de l'émulsion.

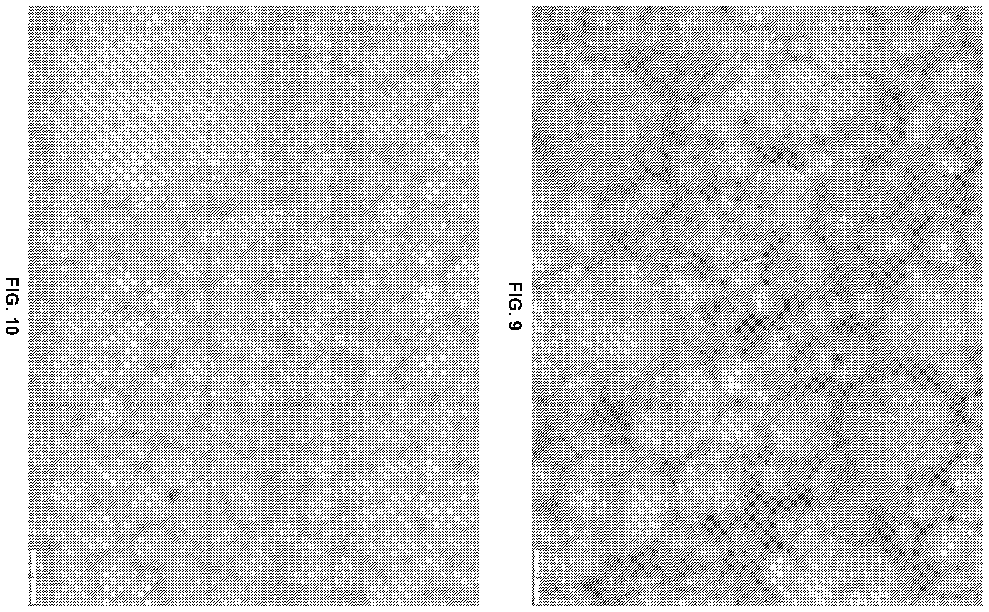

Les deux émulsions n°7 et n°8 ont été observées par microscopie optique après leur préparation (avant la centrifugation). Les clichés de microscopie optique sont présentés en **figures 9** et **10****.**

Pour les deux émulsions, on observe des gouttelettes de phase huileuse monodispersées dans la phase aqueuse. Une émulsion a donc bien été formée. Les gouttelettes ont une taille proche de 10 µm.

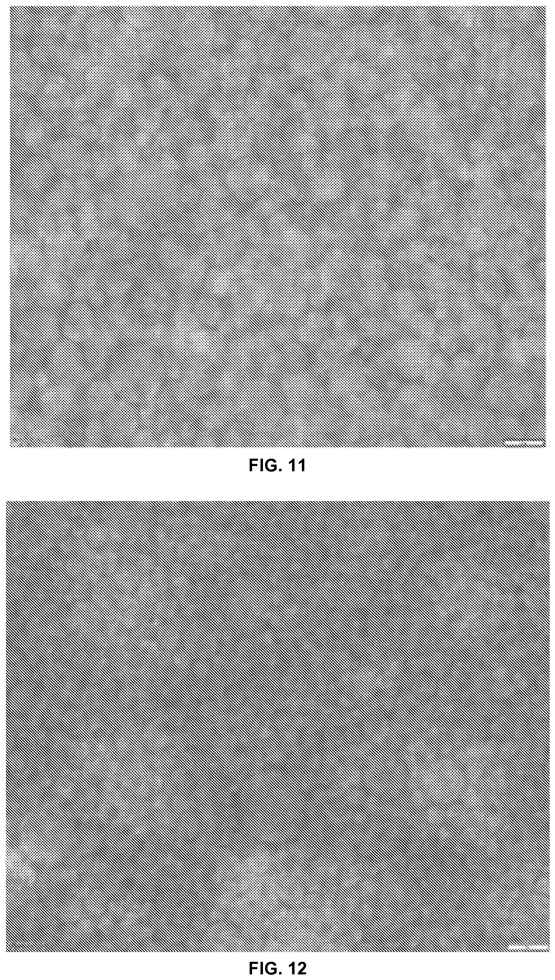

Les tubes coniques en polypropylène contenant les émulsions n°7 et n°8 pour l'étude de la stabilité des émulsions dans le temps (c'est-à-dire les tubes n'ayant pas subi la centrifugation) ont été stockés à température ambiante pendant 20 jours, puis les émulsions n°7 et n°8 ont été observées par microscopie optique. Les clichés de microscopie optique sont présentés en **figures 11** et **12****.**

Les gouttelettes d'huile sont toujours dispersées dans la phase aqueuse, en ce qui concerne les deux émulsions, et aucun crémage n'est observé : les émulsions sont stables dans le temps. La taille des gouttelettes a évolué vers une taille proche de 20 µm en moyenne. Dans l'émulsion à pH 10, la coalescence a été plus faible et les gouttelettes sont restées monodispersées 20 jours après sa préparation alors que les gouttelettes sont plus polydispersées dans l'émulsion à pH 6 après 20 jours de stockage, ce qui pourrait indiquer que la stabilité de l'émulsion est plus élevée à pH 10 par rapport à pH 6.

### Exemple 7 - Emulsions de mélasse fermentée déminéralisée

Deux émulsions comprenant 60 % en poids d'huile de colza et 40 % en poids de mélasse fermentée déminéralisée diluée, et ayant respectivement un pH de 10 (émulsion n°9) et un pH de 3 (émulsion n°10) ont été préparées. Les mélasses fermentées utilisées pour préparer ces émulsions sont des mélasses fermentées comprenant de 85 à 95 % de mélasse fermentée de betterave et de 5 à 15 % de mélasse fermentée de canne. Elles contiennent 70 % en poids de matière sèche et 30 % en poids d'eau (la matière sèche comprenant avant déminéralisation environ 85% en poids de matière organique et 15 % en poids de matière minérale). La déminéralisation des mélasses fermentées a été effectuée par ajout d'acide sulfurique puis séparation des cristaux obtenus. Avant leur incorporation dans les émulsions, les mélasses fermentées ont été diluées en ajoutant 33,3 g d'eau distillée à 66,7 g de mélasse fermentée, de manière à introduire dans les émulsions une quantité de matière organique identique à celle introduite dans les émulsions n°7 et n°8 de l'exemple 6. Pour préparer l'émulsion n°9, une solution aqueuse d'hydroxyde de potassium à 50 % en poids a été ajoutée à la mélasse fermentée déminéralisée jusqu'à l'obtention d'un pH compris entre 10 et 11.

Les émulsions n°9 et n°10 ont ensuite été préparées de la manière décrite pour les émulsions n°7 et n°8 dans l'exemple 6.

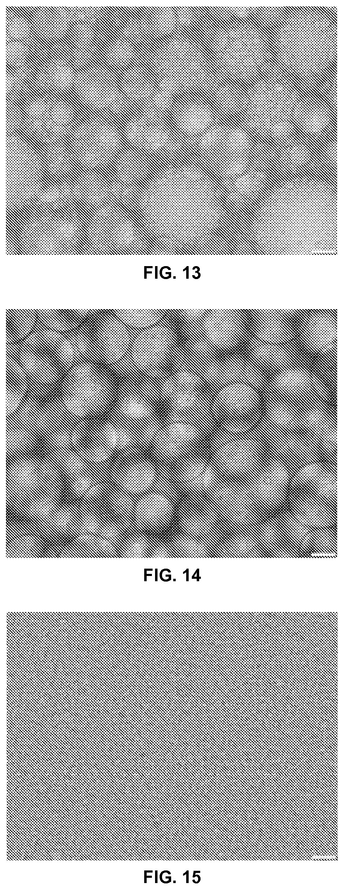

Les deux émulsions n°9 et n°10 ont été observées par microscopie optique après leur préparation. Les clichés de microscopie optique sont présentés en **figures 13 et 14****.**

On constate que pour les deux émulsions (à pH 10 et à pH 3), des gouttelettes d'huile sont dispersées de manière stable dans la phase aqueuse. Des émulsions ont donc bien été obtenues. En outre, la viscosité de l'émulsion n°9 (à pH 10) est plus élevée que celle de l'émulsion n°10 (à pH 3), l'augmentation du pH favorise la stabilité de l'émulsion.

### Exemple 8 - Emulsions de mélasse fermentée dépotassifiée

Deux émulsions comprenant 60 % en poids d'huile de colza et 40 % en poids de mélasse fermentée dépotassifiée, et ayant respectivement un pH de 6 (émulsion n°11) et un pH de 10 (émulsion n°12) ont été préparées. Les mélasses fermentées utilisées pour préparer ces émulsions sont des mélasses fermentées comprenant de 85 à 95 % de mélasse fermentée de betterave et de 5 à 15 % de mélasse fermentée de canne, et ayant une teneur en matière sèche d'environ 60 % en poids. Les mélasses ont été dépotassifiées en effectuant une précipitation du potassium par ajout d'acide sulfurique suivie d'une séparation des cristaux obtenus, puis en effectuant une neutralisation par l'ajout d'ammoniaque jusqu'à atteindre un pH de 6. Pour préparer l'émulsion n°12, une solution aqueuse d'hydroxyde de potassium à 50 % en poids a été ajoutée à la mélasse fermentée dépotassifiée jusqu'à l'obtention d'un pH compris entre 10 et 11.

Les émulsions n°11 et n°12 ont ensuite été préparées de la manière décrite pour les émulsions n°7 et n°8 dans l'exemple 6.

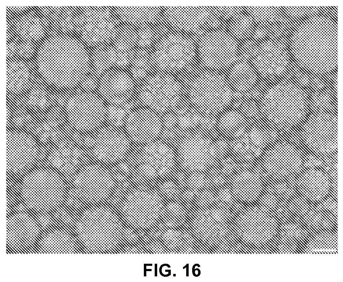

Les deux émulsions n°11 et n°12 ont été observées par microscopie optique après leur préparation. Les clichés de microscopie optique sont présentés en **figures 15** et **16****.**

On observe que les émulsions n°11 (à pH 6) et n°12 (à pH 10) contiennent des gouttelettes d'huile stables dispersées dans la phase aqueuse. Des émulsions ont été formées à pH 6 et à pH 10.

### Exemple 9 - Emulsions avec différentes quantités d'huile

Des émulsions d'huile et de mélasse fermentée ont été préparées de la même façon que l'émulsion n°8 de l'exemple 6, mais avec les proportions d'huile de colza et de mélasse fermentée indiquées ci-dessous.

| **Emulsion n°** | **13** | **14** | **15** |
|---|---|---|---|
| **Huile de colza (% en poids)** | 30 | 40 | 50 |
| **Mélasse fermentée (% en poids)** | 70 | 60 | 50 |

Les émulsions n° 13 à 15 ont été observées par microscopie optique après leur préparation : pour chacune d'elles, des gouttelettes de phase huileuse, d'une taille d'environ 2 à 5 µm, sont monodispersées de manière stable dans la phase aqueuse.

La stabilité forcée (par centrifugation) de ces émulsions a également été étudiée, de la manière décrite dans l'exemple 6. Les émulsions n°13 à 15 sont restées stables.

### Exemple 10 - Emulsions de différentes huiles

Deux émulsions comprenant 60 % en poids d'huile et 40 % en poids de mélasse fermentée ont été préparées de la même façon que l'émulsion n°8 de l'exemple 6, à l'exception du fait que soit de l'huile de tournesol (émulsion n°16), soit de l'huile de pépin de raisin (émulsion n°17) ont été utilisées à la place de l'huile de colza.

Les émulsions n° 16 et 17 ont été observées par microscopie optique après leur préparation. Les émulsions comprennent des gouttelettes de phase huileuse monodispersées dans la phase aqueuse et sont stables. Les gouttelettes de l'émulsion n°16 ont une taille d'environ 3 à 8 µm, et celles de l'émulsion n°17 une taille d'environ 4 à 8 µm.

Ces émulsions ont également été testées pour leur stabilité forcée (via une centrifugation), de la manière décrite dans l'exemple 6. Ces émulsions sont restées stables.

## Revendications

1. Utilisation d'une mélasse fermentée en tant qu'émulsifiant dans une émulsion.

2. Utilisation selon la revendication 1, dans laquelle l'émulsion est une émulsion huile dans l'eau.

3. Utilisation selon la revendication 1 ou 2, dans laquelle la mélasse fermentée est une mélasse fermentée de betterave et/ou une mélasse fermentée de canne.

4. Utilisation selon l'une des revendications 1 à 3, dans laquelle la mélasse fermentée est une mélasse fermentée de betterave.

5. Utilisation selon l'une des revendications 1 à 4, dans laquelle la mélasse fermentée est une mélasse fermentée déminéralisée.

6. Utilisation selon l'une des revendications 1 à 5, dans laquelle la mélasse fermentée est une mélasse fermentée dépotassifiée.

7. Utilisation selon l'une des revendications 1 à 6, dans laquelle la mélasse fermentée est présente dans l'émulsion en une quantité de 25 à 85 % en poids, de préférence de 25 à 60 % en poids, de préférence encore de 25 à 50 % en poids, plus préférentiellement de 30 à 40 % en poids, par rapport au poids total de l'émulsion.

8. Utilisation selon l'une des revendications 1 à 7, dans laquelle l'émulsion comprend une quantité de phase huileuse de 15 à 75 % en poids, de préférence de 40 à 75 % en poids, de préférence encore de 50 à 75 % en poids, plus préférentiellement de 60 à 70 % en poids, par rapport au poids total de l'émulsion.

9. Utilisation selon l'une des revendications 1 à 8, dans laquelle la mélasse fermentée comprend une teneur en matière sèche de 50 à 90 % en poids, de préférence de 55 à 65 % en poids.

10. Utilisation selon l'une des revendications 1 à 9, dans laquelle le pH de l'émulsion vaut de 2 à 11.

11. Utilisation selon l'une des revendications 1 à 10, dans laquelle l'émulsion est une émulsion de bitume ou de pétrole, de préférence l'émulsion est une émulsion de bitume.

12. Utilisation selon l'une des revendications 1 à 11, dans laquelle l'émulsion est à une température supérieure à 40°C.

13. Utilisation selon l'une des revendications 1 à 12, dans laquelle l'émulsion constitue, ou est présente dans, un produit alimentaire, un produit cosmétique, un produit phytosanitaire, un médicament, une peinture, un milieu de flottation, un détergent ou produit d'entretien, un milieu de réaction, tel qu'un milieu de polymérisation, un fluide de récupération assistée du pétrole, ou une colle.

14. Emulsion, de préférence huile dans l'eau, comprenant un bitume et une mélasse fermentée.

## Patentansprüche

1. Verwendung einer fermentierten Melasse als Emulgator in einer Emulsion.

2. Verwendung nach Anspruch 1, wobei die Emulsion eine Öl-in-Wasser-Emulsion ist.

3. Verwendung nach Anspruch 1 oder 2, wobei die fermentierte Melasse eine fermentierte Rübenmelasse und/oder eine fermentierte Zuckerrohrmelasse ist.

4. Verwendung nach einem der Ansprüche 1 bis 3, wobei die fermentierte Melasse eine fermentierte Rübenmelasse ist.

5. Verwendung nach einem der Ansprüche 1 bis 4, wobei die fermentierte Melasse eine entmineralisierte fermentierte Melasse ist.

6. Verwendung nach einem der Ansprüche 1 bis 5, wobei die fermentierte Melasse eine kaliumfreie fermentierte Melasse ist.

7. Verwendung nach einem der Ansprüche 1 bis 6, wobei die fermentierte Melasse in der Emulsion in einer Menge von 25 bis 85 Gewichts-%, vorzugsweise 25 bis 60 Gewichts-%, bevorzugter 25 bis 50 Gewichts-%, noch bevorzugter 30 bis 40 Gewichts-%, bezogen auf das Gesamtgewicht der Emulsion, vorhanden ist.

8. Verwendung nach einem der Ansprüche 1 bis 7, wobei die Emulsion eine Menge an Ölphase von 15 bis 75 Gewichts-%, vorzugsweise 40 bis 75 Gewichts-%, bevorzugter 50 bis 75 Gewichts-%, noch bevorzugter 60 bis 70 Gewichts-%, bezogen auf das Gesamtgewicht der Emulsion, umfasst.

9. Verwendung nach einem der Ansprüche 1 bis 8, wobei die fermentierte Melasse einen Trockenmassegehalt von 50 bis 90 Gewichts-%, vorzugsweise von 55 bis 65 Gewichts-%, umfasst.

10. Verwendung nach einem der Ansprüche 1 bis 9, wobei der pH der Emulsion von 2 bis 11 reicht.

11. Verwendung nach einem der Ansprüche 1 bis 10, wobei die Emulsion eine Bitumen- oder Petroleum-Emulsion ist, vorzugsweise die Emulsion eine Bitumen-Emulsion ist.

12. Verwendung nach einem der Ansprüche 1 bis 11, wobei die Emulsion auf einer Temperatur von mehr als 40 °C ist.

13. Verwendung nach einem der Ansprüche 1 bis 12, wobei die Emulsion ein Lebensmittelprodukt, ein Kosmetikprodukt, ein Pflanzenschutzmittel, ein Arzneimittel, eine Farbe, ein Flotationsmedium, ein Wasch- oder Reinigungsmittel, ein Reaktionsmedium, wie beispielsweise ein Polymerisationsmedium, ein Fluid für unterstützte Ölgewinnung oder ein Klebstoff ist oder darin enthalten ist.

14. Emulsion, vorzugsweise Öl-in-Wasser, umfassend ein Bitumen und eine fermentierte Melasse.

## Claims

1. Use of a fermented molasses as an emulsifier in an emulsion.

2. The use according to claim 1, wherein the emulsion is an oil-in-water emulsion.

3. The use according to claim 1 or 2, wherein the fermented molasses is fermented beet molasses and/or fermented cane molasses.

4. The use according to one of claims 1 to 3, wherein the fermented molasses is fermented beet molasses.

5. The use according to one of claims 1 to 4, wherein the fermented molasses is demineralized fermented molasses.

6. The use according to one of claims 1 to 5, wherein the fermented molasses is depotassified fermented molasses.

7. The use according to one of claims 1 to 6, wherein the fermented molasses is contained in the emulsion in an amount of from 25 to 85 % by weight, preferably from 25 to 60 % by weight, more preferably from 25 to 50 % by weight, further preferably from 30 to 40 % by weight, relative to the total weight of the emulsion.

8. The use according to one of claims 1 to 7, wherein the emulsion comprises an amount of oil phase of from 15 to 75 % by weight, preferably from 40 to 75 % by weight, more preferably from 50 to 75 % by weight, further preferably from 60 to 70 % by weight, relative to the total weight of the emulsion.

9. The use according to one of claims 1 to 8, wherein the fermented molasses has a dry matter content of from 50 to 90 % by weight, preferably from 55 to 65 % by weight.

10. The use according to one of claims 1 to 9, wherein the pH of the emulsion is from 2 to 11.

11. The use according to one of claims 1 to 10, wherein the emulsion is a bitumen or petroleum emulsion, preferably the emulsion is a bitumen emulsion.

12. The use according to one of claims 1 to 11, wherein the emulsion is at a temperature higher than 40 °C.

13. The use according to one of claims 1 to 12, wherein the emulsion is, or is included in, a food product, a cosmetic product, a plant protection product, a medicinal product, a paint, a flotation medium, a detergent or cleaning product, a reaction medium such as a polymerization medium, an enhanced oil recovery fluid, or an adhesive.

14. An emulsion, preferably an oil-in-water emulsion, comprising a bitumen and a fermented molasses.
